(19) Europäisches Patentamt
European Patent Office
Office européen des brevets

(11) **EP 1 113 585 B1**

(12) **EUROPÄISCHE PATENTSCHRIFT**

(45) Veröffentlichungstag und Bekanntmachung des Hinweises auf die Patenterteilung:
**19.10.2005 Patentblatt 2005/42**

(51) Int Cl.$^7$: **H04B 1/707**, H04B 1/62

(21) Anmeldenummer: **00117965.4**

(22) Anmeldetag: **22.08.2000**

(54) **Verfahren zum Empfang von Funksignalen in einer Mobilstation und die entsprechende Mobilstation**

Method for radio reception in a mobile station and the corresponding mobile station

Procédé pour la réception radio dans une station mobile et station mobile correspondante

(84) Benannte Vertragsstaaten:
**DE IT SE**

(30) Priorität: **11.10.1999 DE 19949007**

(43) Veröffentlichungstag der Anmeldung:
**04.07.2001 Patentblatt 2001/27**

(73) Patentinhaber: **ROBERT BOSCH GMBH**
**70442 Stuttgart (DE)**

(72) Erfinder:
• **Kowalewski, Frank**
**38228 Salzgitter (DE)**

• **Mangold, Peter**
**30173 Hannover (DE)**

(56) Entgegenhaltungen:
**EP-A- 0 757 464      US-A- 4 866 395**

• **ESMAILZADEH R.; NAKAGAWA M.: 'Pre-RAKE diversity combination for direct sequence spread spectrum' PROCEEDINGS OF THE INTERNATIONAL CONFERENCE ON COMMUNICATIONS (ICC) Bd. 3, 23 Mai 1993 - 26 Mai 1993, GENEVA, Seiten 463 - 467**

## Beschreibung

### Stand der Technik

Die Erfindung geht aus von einem Verfahren zum Empfang von Funksignalen bzw. einer Mobilstation zum Senden und Empfangen von Funksignalen nach der Gattung der unabhängigen Patentansprüche.

Aus der EP 0757464 A2 ist ein QAM Spreizspektrumdemodulationssystem bekannt, bei dem ein Schaltkreis In-Phase (I) und Quadratursignale (Q) in digitaler Form aus einem empfangenen Signal ableitet. Ein Phasenprozessor empfängt den Phasenausgangswert und berechnet einen Phasenwinkelwert des empfangenen Signals. Bei der Ausführungsform nach Figur 7 wird aus einem Phasenfehler eines jeden Symbols der aktuelle Phasenfehlerwinkel ermittelt und in einer Regelschleife dem komplexen Multiplizierer 104 zurückgeführt, um eine Trägerrückgewinnung zu ermöglichen. Bei der Ausführungsform nach Fig. 12 wird im Rahmen eines Post Processing, also einer Nachbearbeitung, eine Abbildung von fünf Bits des ermittelten aktuellen Phasenfehlerwinkels in einen Bereich zwischen 0 und 90 Grad durchgeführt.

Es ist bereits aus R. Esmailzadeh und M. Nakagawa: "Pre-Rake Diversity Combination for Direct Sequence Spread Spectrum Mobile Communications Systems", IEICE Trans. Commun., Vol. E76-B., No. 8, August 1993 bekannt, dass bei Codespreizung eine Vorverzerrung mittels einer Pre-Rake-Vorverzerrung möglich ist. Diese Vorverzerrung der zu versendenden Signale wird vorzugsweise in einer Basisstation durchgeführt, denn in der Basisstation, die an einem elektrischen Versorgungsnetz angeschlossen ist, können leichter komplexe Signalverarbeitungsfunktionen integriert werden als in einer Mobilstation, deren Batterie- oder Akkumulatorlebensdauer begrenzt ist. Diese Vorverzerrung bedingt, dass die Mobilstation zur Basisstation in der sogenannten Rückwärtsstrecke Trainingssymbole mit den übrigen Funksignalen versendet, so dass die Basisstation die Übertragungseigenschaften des Funkkanals zwischen der Basisstation und der Mobilstation schätzen kann. In der Vorwärtsstrecke von der Basisstation zu der Mobilstation sind dann keine Trainingssymbole notwendig, da die Basisstation aus der Kanalschätzung von der Rückwärtsstrecke auf die Vorwärtsstrecke schließt. Es wird die sogenannte Kanalreziprozität angenommen. Dies spart Übertragungsbandbreite durch den Einsatz dieser unsymmetrischen Basisstation-Mobilstation-Struktur.

### Vorteile der Erfindung

Das erfindungsgemäße Verfahren zum Empfang von Funksignalen bzw. die erfindungsgemäße Mobilstation mit den Merkmalen der unabhängigen Patentansprüche hat demgegenüber den Vorteil, daß die Vorverzerrung verbessert wird, da eine absolute Kanalreziprozität nicht gegeben ist und durch eine Phasenkorrektur dieser daher entstehende Fehler vorteilhafterweise korrigiert wird, um bessere Datendetektionsergebnisse in der empfangenden Mobilstation zu erzielen.

Weiterhin ist von Vorteil, daß durch eine Mittelung der Phasenfehler der von der Mobilstation empfangenen Funksignale aufgrund der unterschiedlichen Sendetechnik in Mobilstation und Basisstation und der ungleichen Qualität der verwendeten Elemente erkannt und eliminiert werden. Durch kurze Mittelungen können Phasenänderungen aufgrund eines sich verändernden Funkkanals korrigiert werden.

Durch die in den abhängigen Ansprüchen aufgeführten Maßnahmen sind vorteilhafte Weiterbildungen und Verbesserungen der in den unabhängigen Ansprüchen angegebenen Verfahren bzw. Mobilstation möglich.

Besonders vorteilhaft ist, daß der Phasenkorrekturfaktor dadurch berechnet wird, daß der Mittelwert normiert wird, so daß keine Phasenmodulation durch den Phasenkorrekturfaktor entsteht und daß die Phase konjugiert wird, d.h. daß das Vorzeichen des Phasenfehlers umgedreht wird, so daß der mittlere Phasenfehler eliminiert wird.

In einer vorteilhaften Weiterbildung der Erfindung ist es möglich, daß neben einer Phasenmodulation auch eine Kombination aus einer Phasenmodulation und einer Amplitudenmodulation möglich ist, wie es z. B. die Quadraturamplitudenmodulation (QAM) ermöglicht. Dadurch können viel mehr Zustände für die modulierten Signale geschaffen werden.

### Zeichnung

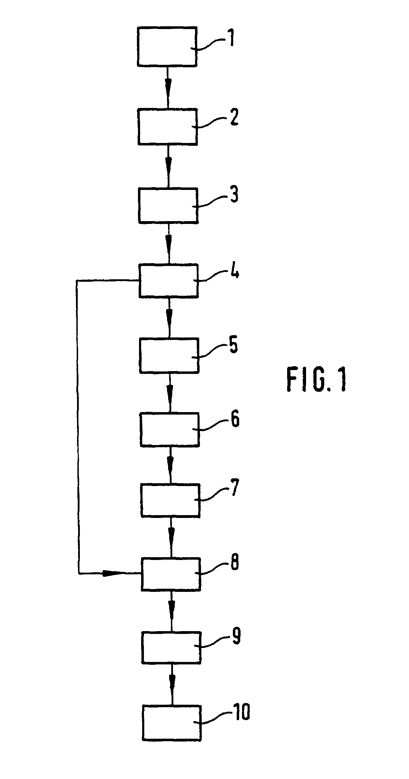

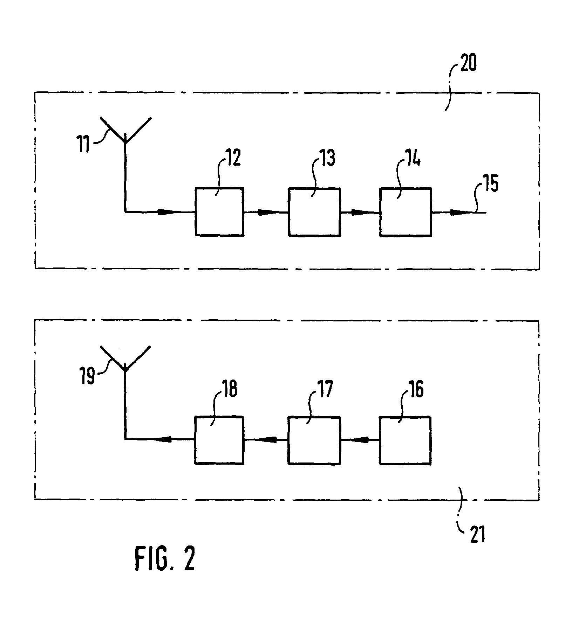

Ausführungsbeispiele der Erfindung sind in der Zeichnung dargestellt und in der nachfolgenden Beschreibung näher erläutert. Es zeigen Figur 1 ein erfindungsgemäßes Verfahren zum Empfang von codegespreizten Funksignalen und Figur 2 eine erfindungsgemäße Mobilstation zum Senden und Empfangen von Funksignalen.

### Beschreibung der Ausführungsbeispiele

Mobilfunksysteme weisen Basisstationen und Mobilstationen auf, wobei eine Mobilstation nur mit der Basisstation direkt kommuniziert. Die Übertragung von der Basisstation zur Mobilstation wird mit Downlink oder Vorwärtsstrecke bezeichnet, während die Übertragungsstrecke von der Mobilstation zur Basisstation als Uplink oder Rückwärtsstrecke bezeichnet wird. Da die Basisstation meist an einem Gebäude oder einem Masten plaziert wird und diese Basisstation an einem elektrischen Versorgungsnetz angeschlossen ist und die Basisstation für den Einsatz eines größeren Gebietes vorgesehen ist, können in die Basisstation bessere und mehr Energie verbrauchende Funktionen integriert werden als in einer Mobilstation, die nur eine begrenzte Energieversorgung mittels einer Batterie oder eines Akkumulators aufweist. Es ist also ein Ziel, den Energieverbrauch der Mobilstation zu minimieren. Weiterhin ist eine Basisstation ein Produkt, das dementsprechend in viel geringeren Stückzahlen verkauft wird als eine Mobilstation, die ein Massenprodukt ist. Daher ist der Preisdruck bei einer Mobilstation viel größer und es sollten so viele Funktionen wie möglich von der Mobilstation in die Basisstation transferiert werden, um die Mobilstation so billig wie möglich zu machen.

Codespreizung ist eine Modulationstechnik, die die zukünftigen Mobilfunksysteme wie UMTS (Universal Mobile Telecommunication System) dominieren wird. Bei Codespreizung wird pro Mobilstation ein spezifischer Code verwendet, um die zu versendenden Informationen zu codieren und die empfangenen Informationen zu dekodieren.

Für eine Funkzelle, in der sich eine Basisstation und mehrere Mobilstationen befinden, wird bei Codespreizung nur ein Spektrum für die Übertragung von Funksignalen für alle Übertragungen von Funksignalen verwendet. Dadurch ist eine bessere Ausnutzung des vorhandenen Frequenzspektrums möglich. Die Codes für die einzelnen Mobilstationen sind so konstruiert, daß die gesendeten Signale, die mit diesen Codes gespreizt werden sich gegenseitig nicht stören, wobei dieses Verhalten mit Orthogonalität bezeichnet wird. Sind die Codes auch am Empfänger orthogonal, genügt ein einfacher Korrelator, der auf einem Signalprozessor implementiert ist, zur Codeentspreizung.

Aufgrund von Übertragungseigenschaften eines Funkkanals ist es möglich, daß die unterschiedlichen Codes zueinander ihre Orthogonalität während der Übertragung verlieren. Eine Mobilstation, die dann die für sie bestimmten Signale entspreizt, entspreizt auch einen geringen Anteil der mit den anderen Codes codierten Signale, da die Orthogonalität verlorengegangen ist. Dieser Anteil macht sich als Rauschen bemerkbar und verschlechtert das Signal-zu-Rausch-Verhältnis der empfangenen Signale und damit die Empfangsqualität.

Neben der einfachen Korrelation zur Codeentspreizung wurden weitere Verfahren entwickelt. Ein solches Verfahren ist die sogenannte Joint-Detection, wobei hier von einer Mobilstation alle empfangenen Codes entspreizt werden und dann nur noch die für diese Mobilstation gesendeten Signale weiter verwendet werden und die anderen entspreizten Signale verworfen werden. Diese Lösung bedeutet einen erhöhten Hardwareaufwand für die Mobilstation und damit einen größeren Energieverbrauch. Bei der Joint-Detection werden Trainingssymbole in den empfangenen Funksignalen mit abgespeicherten Trainingssymbole verglichen, um die Übertragungseigenschaften der Funkkanäle zu ermitteln, um die Orthogonalität der Codes zueinander wieder herzustellen.

Durch den Einsatz einer sogenannten Joint-Predistortion in einem Sender einer Basisstation wird dieses Verfahren als Vorverzerrung der zu versendenden Signale eingesetzt. Dafür muß die Basisstation im Rückkanal durch die empfangenen Signale von den Mobilstationen die Übertragungseigenschaften der Funkkanäle schätzen, um damit die zu versendenden Funksignale entsprechend vorzuverzerren, so daß die Orthogonalität der Codes bei den empfangenden Mobilstationen gewährleistet ist. Dafür versendet die Mobilstation Trainingssymbole zur Basisstation, die die empfangenen Trainingssymbole mit abgespeicherten Trainingssymbolen vergleicht, um die Übertragungseigenschaften des Funkkanals zu ermitteln. Es wird also Kanalreziprozität angenommen. Vorteilhafterweise müssen dabei keine Trainingssymbole von der Basisstation zur Mobilstation versendet werden, womit Übertragungsbandbreite eingespart wird. Solch einer Vorverzerrung liegt also die Annahme zugrunde, daß sich die Kanäle für die zu versendenden Funksignale so verhalten wie die für die soeben empfangenen Funksignale. Dieses Prinzip wird eben mit Reziprozität bezeichnet. Da sich jedoch die Träger der Mobilstationen bewegen, ist das Prinzip der Reziprozität nicht richtig, denn der Funkkanal und damit die Übertragungseigenschaften dieses Funkkanals ändern sich. Durch eine Korrektur der Phase der empfangenen Funksignale ist eine Verbesserung der fehlerhafte Annahme der Reziprozität möglich.

In Figur 1 ist ein erfindungsgemäßes Verfahren zum Empfang von Funksignalen, die codegespreizt wurden, dargestellt. In Verfahrensschritt 1 wird das Verfahren gestartet, in Verfahrensschritt 2 werden die codegespreizten Funksignale empfangen, verstärkt, gefiltert und in eine Zwischenfrequenz heruntergemischt und digitalisiert. In Verfahrensschritt 3 werden die empfangenen Funksignale einer Codeentspreizung unterworfen. Diese Codeentspreizung wird mittels eines Korrelators durchgeführt. Es werden also nur die Signale, die für die Mobilstation bestimmt sind, entspreizt, da die Funksignale, wie oben beschrieben, mittels joint-predistortion vorverzerrt werden.

Für die codeentspreizten Signale wird in Verfahrensschritt 4 pro Symbol eine Phase bestimmt und damit werden die Funksignale demoduliert. Da die Funksignale Symbole aufweisen, wird pro Symbol, also mit jeder Symboldauer ein Phasenwert bestimmt. Es liegt hier eine kohärente Demodulation vor. Die Phasen der Symbole in den Funksignalen werden bestimmt, indem die empfangenen Signale mit einem Trägersignal multipliziert werden. Daraus ergibt sich die Phase pro Symbol. Das Trägersignal stellt beispielsweise den Nullwinkel dar und durch die Multiplikation entstehen Differenzterme zwischen der Phase des empfangenen Signals und der Phase des Trägersignals, wodurch sich die Phase des empfangenen Signals ergibt. Das Trägersignal wird bekanntermaßen mittels einer Regelschleife nachgeführt.

In Verfahrensschritt 5 werden die ermittelten Phasen mittels einer vorgegebenen Abbildungsvorschrift in einen vorgegebenen Phasenabschnitt abgebildet. Es ist wichtig, daß ein Phasenfehler für alle Phasen bestimmt wird. Die absolute Lage der einzelnen Phasen ist dabei nicht wichtig, sondern allein die Abweichung. Daher werden alle Phasen auf einen bestimmten Wert abgebildet und die Abweichung von diesem Wert ergibt dann den Phasenfehler, der für die Funksignale als Korrektur verwendet wird.

Hier wird eine Quadraturphasenmodulation (QPSK= Quadraturphasenumtastung) verwendet. Bei einer Quadraturphasenmodulation liegen im sogenannten Phasenkreuz vier Phasen für die Modulation zur Verfügung, also z.B. 45°, 135°, 225°, 315°. Das Phasenkreuz spannt eine komplexe Ebene auf, in der ein Signal bezüglich seiner Amplitude und seiner Phase eingetragen wird. Auf der Abszisse wird der Realteil abgetragen, während auf der Ordinate der Imaginärteil abgetragen wird. Die Amplitude wird dabei nicht moduliert. In einer Weiterbildung der Erfindung ist es jedoch möglich, auch die Amplituden zu modulieren.

Moduliert man Amplituden und Phasen, gelangt man zur Quadraturamplitudenmodulation. Bei der Quadraturphasenumtastung, die hier verwendet wird, werden die einzelnen Phasen in den ersten Quadranten des Phasenkreuzes abgebildet. Bei QPSK werden die Abszisse und die Ordinate des Phasenkreuzes als Entscheidungsschwellen verwendet, so daß sich vier Entscheidungsschwellen ergeben. Der erste Quadrant ist demnach hier der vorgegebene Phasenbereich.

Das demodulierte Basisbandsignal im Empfänger zum Zeitpunkt K * T, wobei T die Symboldauer und K eine ganze Zahl ist, wird mit

$$y_k = d_k \cdot e^{j\Delta\varphi} + n_k$$

beschrieben, wobei $d_k$ ein komplexes Symbol ist, daß die unterschiedlichen Modulationszustände beschreibt. Das sind die demodulierten Phasen. $n_k$ gibt das additive weiße Rauschen an und $\Delta\varphi$ beschreibt den Phasenfehler. Verwendet man dafür eine allgemeine Darstellung in Polarkoordinaten, folgt allgemein

$$y_k = \left| d_k \cdot e^{j\Delta\varphi} + n_k \right| \cdot e^{j\cdot\arg(d_k \cdot e^{j\Delta\varphi} + n_k)} = |y_k| \cdot e^{j\varphi_y},$$

wobei $\varphi_y$ die Gesamtphase angibt und $y_k$ den Betrag.

Als Abbildungsvorschrift wird im Falle der QPSK der komplexe Signalraum in vier Sektoren aufgeteilt:

S1: $0 \leq \varphi_y < \Pi/2$
S2: $\Pi/2 \leq \varphi_y < \Pi$
S3: $\Pi \leq \varphi_y < 3\Pi/2$
S4: $3\Pi/2 \leq \varphi_y < 2\Pi$

Es werden alle Abtastwerte in den Sektor S1, also den ersten Quadranten abgebildet, und zwar durch den folgenden Algorithmus: Für Winkel, die sich im Sektor S1 befinden, bleibt der Winkel unverändert. Für Winkel, die sich im Sektor S2 befinden wird der Winkel um -$\Pi$/2 verändert, so daß sich die Winkel dann im Sektor S1 befinden. Für Winkel, die sich im Sektor S3 befinden, wird der Winkel um -$\Pi$ gedreht, so daß sich die Winkel dann im Sektor S1 befinden. Für Winkel, die sich im Sektor S4 befinden, wird der Winkel um -3$\Pi$/2 gedreht, so daß sich diese Winkel dann im Sektor S1 befinden.

In Verfahrensschritt 6 wird ein Mittelwert der Phasenabweichung über mehrerer Symbole berechnet. Eine lineare Mittelung über n Symbole von y ergibt sich aus

$$\hat{y} = \frac{1}{n} \cdot \sum_{k=1}^{n} y_k \ .$$

Die Anzahl der Symbole, die für die Mittelung verwendet werden, wird vorgegeben. Eine größere Anzahl hilft Phasenfehler zu korrigieren, die von analogen Komponenten im Sender und im Empfänger herrühren. Kurzfristige Phasenfehler aufgrund eines veränderten Funkkanals werden dabei herausgemittelt, zum Beispiel aufgrund eines vorbeifahrenden Fahrzeugs. Daher ist eine kleinere Anzahl der Symbole für die Mittelung zur Eliminierung der Phasenfehler durch die zuletzt genannten Effekte geeignet.

Nach Normierung und Konjugation in Verfahrensschritt 7 wird der Phasenkorrekturfaktor p demnach folgendermaßen berechnet:

$$p = \frac{\hat{y}^*}{\left|\hat{y}\right|} \approx e^{-\Delta\varphi} \ .$$

In Verfahrensschritt 8 wird das entspreizte und demodulierte Funksignal aus Verfahrensschritt 4 mit dem Phasenkorrekturfaktor multipliziert, so daß das Funksignal damit um den durchschnittlichen Phasenfehler korrigiert wird. In Verfahrensschritt 9 wird eine Datendetektion durchgeführt, indem die Phasen der Symbole mit Entscheidungsschwellen verglichen werden, und in Verfahrensschritt 10 liegen die detektierten Daten vor.

In Figur 2 wird eine erfindungsgemäße Mobilstation mit einem Empfangsteil 20 und einem Sendeteil 21 gezeigt. Zu dem Empfangsteil 20 gehört eine Antenne 11, eine Hochfrequenz-Empfangsvorrichtung 12, ein Empfänger 13, ein Datendetektor 14 und ein Ausgang für die detektierten Daten 15. Zu dem Sendeteil 21 gehört eine Datenquelle 16, ein Modulator 17, eine Hochfrequenzsendevorrichtung 18 und eine Antenne 19.

Mittels der Antenne 11 werden die Funksignale empfangen, um in der Hochfrequenz-Empfangsvorrichtung 12 verstärkt, gefiltert und in eine Zwischenfrequenz umgesetzt zu werden. Darüber hinaus werden die Signale digitalisiert. Im Empfänger 13 werden die Signale entspreizt und die oben beschriebene Phasenkorrektur vorgenommen. Dieser Empfänger 13 ist auf einem Signalprozessor implementiert. Die korrigierten Signale werden in einem Datendetektor 14, der auf dem gleichen Prozessor implementiert sein kann, aber auch auf einem getrennten Prozessor vorhanden sein kann, detektiert. An dem Ausgang 15 liegen die detektierten Daten als Datenstrom vor.

In einer Datenquelle 16, die ein Mikrophon mit angeschlossener Elektronik zur Wandlung von akustischen Signalen in elektrische Signale zur Verstärkung und Digitalisierung dieser Signale vorgesehen ist, werden die zu versendenden Daten generiert. Neben einem Mikrophon kann auch ein Computer oder eine Kamera eine Datenquelle sein. In einem Modulator 17 erzeugen die von der Datenquelle 16 kommenden Signale Modulationssignale, die mit der oben beschriebenen Quadraturphasenumtastung moduliert werden. Darüber hinaus werden im Modulator 17 die zu versendenden Signale codegespreizt. In dem Modulator 17 werden auch die Trainingssignale den Nutzsignalen hinzugefügt. Der Modulator 17 ist auf einem Prozessor implementiert. In einer Hochfrequenzsendevorrichtung 18 werden die zu versendenden Signale in die Sendefrequenz umgesetzt, verstärkt, um dann mittels der Antenne 19 versendet zu werden.

**Patentansprüche**

1. Verfahren zum Senden von Funksignalen von einer Basisstation und zum Empfang von Funksignalen in einer Mobilstation, wobei die Funksignale von der Basisstation zu mindestens einer Mobilstation versendet werden, wobei die Funksignale Symbole aufweisen, wobei die Funksignale in der Basisstation mit einem Code für jede Mobilstation codegespreizt werden, wobei die Funksignale in der Basisstation gemäß der erwarteten Übertragungseigenschaften zu jeder Mobilstation vorverzerrt werden, wobei die Funksignale bezüglich ihrer Phasen moduliert werden, **dadurch gekennzeichnet, dass** von einer Mobilstation von der Basisstation zu dieser Mobilstation gesendete Funksignale codeentspreizt werden (3), dass von der Mobilstation die Phasen der Funksignale für jedes Symbol ermittelt werden (4), um eine Phasendemodulation durchzuführen, dass von der Mobilstation die Phasen nach einer vorgegebenen Regel auf einen bestimmten Wert abgebildet werden (5), dass aus einer vorgegebenen Anzahl von abgebildeten Phasen ein Mittelwert gebildet wird (6), wobei die Abweichung des Mittelwertes vom bestimmten Wert einen durchschnittlichen Phasenfehler darstellt, dass aus dem Mittelwert ein Phasenkorrekturfaktor berechnet wird (7) und dass der Phasenkorrekturfaktor mit den demodulierten Funksignalen zur Korrektur um den durchschnittlichen Phasenfehlermultipliziert wird (8), bevor die Funksignale detektiert werden.

2. Verfahren nach Anspruch 1, **dadurch gekennzeichnet, dass** der Phasenkorrekturfaktor durch Normierung und Konjugation des Mittelwerts berechnet wird.

3. Verfahren nach Anspruch 1, **dadurch gekennzeichnet, dass** die Funksignale bezüglich ihrer Phasen und Amplituden moduliert werden.

4. Mobilstation zum Senden und Empfangen von Funksignalen, wobei ein Empfangsteil (20) vorgesehen ist, das eingerichtet ist codegespreizte Funksignale zu empfangen wobei ein Sendeteil (21) vorgesehen ist, das eingerichtet ist die von der Mobilstation codegespreizten Funksignale mit Trainingssignalen zu versenden wobei die Funksignale Symbole aufweisen, wobei das Empfangsteil (20) der Mobilstation eingerichtet ist die gemäß der erwarteten Übertragungseigenschaften der Funkkanäle vorverzerrten Funksignale zu empfangen wobei die Mobilstation einen Modulator (17) im Sendeteil (21) umfasst, der eingerichtet ist die zu versendenden Funksignale bezüglich der Phase zu modulieren **dadurch gekennzeichnet, dass** ein Empfänger (13) im Empfangsteil (20) der Mobilstation eingerichtet ist zu dieser Mobilstation gesendete Funksignale code zu entspreizen dass der Empfänger (13) eingerichtet ist die Phasen der Funksignale für jedes Symbol zu ermitteln um eine Phasendemodulation durchzuführen, dass der Empfänger (13) eingerichtet ist die Phasen nach einer vorgegebenen Regel auf einen bestimmten Wert abzubilden dass der Empfänger (13) eingerichtet ist aus den abgebildeten Phasen einen Mittelwert zu bilden wobei die Abweichung des Mittelwertes vom bestimmten Wert einen durchschnittlichen Phasenfehler darstellt, dass der Empfänger (13) eingerichtet ist aus dem Mittelwert einen Phasenkorrekturfaktor zu berechnen und dass der Empfänger (13) eingerichtet ist den Phasenkorrekturfaktor mit den codeentspreizten Funksignalen zur Korrektur um den durchschnittlichen Phasenfehler zu multiplizieren bevor ein Datendetektor (14) die Funksignale detektiert.

5. Mobilstation nach Anspruch 4, **dadurch gekennzeichnet, dass** der Empfänger eingerichtet ist den Phasenkorrekturfaktor durch Normierung und Konjugation des Mittelwertes zu berechnen.

6. Mobilstation nach Anspruch 4, **dadurch gekennzeichnet, dass** die Mobilstation eingerichtet ist die Funksignale bezüglich ihrer Phasen und ihrer Amplituden zu modulieren.

## Claims

1. Method for transmission of radio signals from a base station and for reception of radio signals in a mobile station, with the radio signals being sent from the base station to at least one mobile station, with the radio signals having symbols, with the radio signals being code-spread in the base station using a code for each mobile station, with the radio signals being predistorted in the base station in accordance with the expected transmission characteristics for each mobile station, with the radio signals being phase-modulated, **characterized in that** radio signals which are transmitted from the base station to a mobile station are code-despread (3) by this mobile station, **in that** the phases of the radio signals for each symbol are determined (4) by the mobile station in order to carry out phase demodulation, **in that** the phases are mapped (5) in accordance with a predetermined rule onto a specific value by the mobile station, **in that** a mean value is formed (6) from a predetermined number of mapped phases, with the discrepancy between the mean value and the specific value representing an average phase error, **in that** a phase correction factor is calculated (7) from the mean value, and **in that** the phase correction factor is multiplied (8) by the demodulated radio signals for correction by the average phase error, before the radio signals are detected.

2. Method according to Claim 1, **characterized in that** the phase correction factor is calculated by normalization and conjugation of the mean value

3. Method according to Claim 1, **characterized in that** the radio signals are phase-modulated and amplitude-modulated.

4. Mobile station for transmission and reception of radio signals, with a receiving section (20) being provided, which is designed to receive code-spread radio signals, with a transmitting section (21) being provided which is designed to send radio signals, which have been code-spread by the mobile station, with training signals, with the radio signals having symbols, with the receiving section (20) of the radio station being designed to receive the radio signals which have been predistorted in accordance with the expected transmission characteristics of the radio channels, with the mobile station having a modulator (17) in the transmitting section (21) which is designed to phase-modulate the radio signals to be transmitted, **characterized in that** a receiver (13) in the receiving section (20) of the mobile station is designed to code-despread radio signals which are sent to this mobile station, **in that** the receiver (13) is designed to determine the phases of the radio signals for each symbol in order to carry out phase demodulation, **in that** the receiver (13) is designed to map the phases onto a specific value in accordance with a predetermined rule, **in that** the receiver (13) is designed to form a mean value from the mapped phases, with the discrepancy between the mean value and the specific value representing an average phase error, **in that** the receiver (13) is designed to calculate a phase correction factor from the mean value, and **in that** the receiver (13) is designed to multiply the phase correction factor by the code-despread radio signals for correction by the average phase error, before a data detector (14) detects the radio signals.

5. Mobile station according to Claim 4, **characterized in that** the receiver is designed to calculate the phase correction factor by normalization and conjugation of the mean value.

6. Mobile station according to Claim 4, **characterized in that** the mobile station is designed to phase-modulate and amplitude-modulate the radio signals.

## Revendications

1. Procédé pour l'envoi de signaux radio à partir d'une station de base et pour la réception de signaux radio dans une station mobile, selon lequel les signaux radio sont envoyés à partir de la station de base à au moins une station mobile, les signaux radio présentent des symboles et sont cryptés dans la station de base avec un code pour chaque station mobile, les signaux radio étant préalablement brouillés dans la station de base selon les propriétés de transmission attendues vers chaque station mobile, et sont modulés en ce qui concerne leurs phases, **caractérisé en ce que** des signaux radio envoyés par la station de base à une station mobile sont décryptés (3) par cette station mobile, la station mobile (4) détermine pour chaque symbole les phases des signaux radio, pour opérer une démodulation de phases, la station mobile réforme les phases (5) à une valeur déterminée selon une règle prédéterminée, on forme (6) une valeur moyenne à partir d'un nombre prédéterminé de phases représentées, l'écart de la valeur moyenne par rapport à la valeur déterminée représentant un défaut de phase moyen, on calcule un facteur de correction de phase (7) à partir de la valeur moyenne, et le facteur de correction de phase est multiplié (8) par les signaux radio démodulés pour effectuer une correction du défaut de phase moyen, avant que les signaux radio ne soient détectés.

2. Procédé selon la revendication 1, **caractérisé en ce qu'**

on calcule le facteur de correction de phase par réduction et conjugaison de la valeur moyenne.

3. Procédé selon la revendication 1,
**caractérisé en ce qu'**
on module les signaux radio en phases et en amplitudes.

4. Station mobile pour l'envoi et la réception de signaux radio, dans laquelle une partie de réception (20) est conçue pour recevoir des signaux radio cryptés, une partie d'émission (21) est conçue pour envoyer des signaux radio cryptés par la station mobile avec des signaux de conditionnement, des signaux radio présentant des Symboles, la partie de réception (20) de la station mobile est conçue pour recevoir les signaux radio préalablement brouillés selon les propriétés de transmission attendues des canaux radio, la station mobile comprend dans la partie d'émission (21), un modulateur (17) conçu pour moduler les signaux radio à envoyer en ce qui concerne la phase,
**caractérisée en ce qu'**
un récepteur (13) dans la partie de réception (20) de la station mobile est conçu pour décrypter des signaux radio envoyés à cette station mobile, le récepteur (13) est conçu pour déterminer les phases des signaux radio pour chaque symbole pour opérer une démodulation de phases, le récepteur (13) est conçu pour former les phases à une valeur déterminée selon une règle prédéterminée, le récepteur (13) est conçu pour foxrner une valeur moyenne à partir des phases représentées, l'écart de la valeur moyenne par rapport à la valeur déterminée représentant un défaut de phase moyen, le récepteur (13) est conçu pour calculer un facteur de correction de phase à partir de la valeur moyenne, et le récepteur (13) est conçu pour multiplier le facteur de correction de phase par les signaux radio cryptés pour effectuer une correction du défaut de phase moyen, avant qu'un détecteur de données (14) ne détecte les signaux radio.

5. Station mobile selon la revendication 4,
**caractérisée en ce que**
le récepteur est conçu pour calculer le facteur de correction de phase par réduction et conjugaison de la valeur moyenne.

6. Station mobile selon la revendication 4,
**caractérisée en ce que**
la station mobile est conçue pour moduler les signaux radio en phases et en amplitudes.

FIG.1

FIG. 2